# FASCICULE DE BREVET EUROPEEN

(11) **EP 2 275 225 B1**
(45) Date de publication et mention de la délivrance du brevet: **21.11.2012**
(21) Numéro de dépôt: 10354037.3
(22) Date de dépôt: 15.07.2010
(51) Int. Cl.: B23P 19/00, B25B 27/00

(54) **Dispositif d'alimentation en écrous à sertir pour unité de sertissage**
Nietmutterzuführvorrichtung für eine Crimpeinheit
Pierce nuts feeding device for a crimping unit

(30) Priorité: 16.07.2009 FR 0903491
(43) Date de publication de la demande: 19.01.2011
(73) Titulaire: Bollhoff Otalu S.A., 73490 La Ravoire (FR)
(72) Inventeur: Macchieraldo, David, 73170 Traize (FR)
(74) Mandataire: Hecké, Gérard

(56) Documents cités:
- EP-A1- 0 587 916
- EP-A1- 1 080 826
- WO-A1-2006/063630
- FR-A1- 2 796 581
- JP-A- 61 109 632

## Description

### Domaine technique de l'Invention

L'invention est relative à un dispositif pour alimenter en écrous à sertir une unité de sertissage depuis une zone de stockage des écrous.

### État de la technique

Les unités de sertissage réalisent en automatique des opérations de vissage, de sertissage et dévissage d'écrous. Afin de réaliser les opérations évoquées ci-dessus, et ce de manière autonome, il convient d'utiliser des dispositif permettant la mise en place des écrous directement sur une tige de traction de l'unité de sertissage. Il existe actuellement des solutions permettant de distribuer des écrous à des unités de sertissage. Ces solutions utilisent toutes des actionneurs pneumatiques.

De telles solutions à base d'actionneurs pneumatiques sont coûteuses à réaliser, et sont difficiles à mettre en place et à entretenir.

Le document FR2796581 décrit une machine de sertissage de vis comportant un dispositif d'amenée des vis à sertir muni d'une conduite de transport des vis raccordée à un organe de réception des vis à sertir. L'organe de réception comporte un élément de manutention muni d'un logement pour vis. L'élément est apte à orienter une vis d'une première position dans le prolongement de la conduite de transport à une deuxième position dans la direction de sertissage. En fait, l'élément garde la même position, mais il effectue une rotation sur lui-même. La vis peut se déplacer par soufflage. L'entraînement d'une position à l'autre se fait mécaniquement.

Le document EP0587916, qui est considéré comme le document de l'art antérieur le plus proche, décrit un dispositif comportant un membre de préhension d'un écrou. Le membre de préhension est déplacé d'un tube de transfert d'un écrou, où l'écrou est récupéré par le membre de préhension, à une position de livraison de l'écrou. Ce déplacement est réalisé par un moteur.

### Objet de l'invention

L'objet de l'invention a pour but de réaliser un dispositif d'alimentation en écrous à sertir pour unité de sertissage nécessitant un faible entretien tout en permettant un cadencement élevé de sertissage.

Ce but est atteint par un dispositif comportant les caractéristiques de la revendication 1.

Selon une variante, le mécanisme de serrage comporte des moyens pour solliciter élastiquement en continu les mors vers la position de fermeture.

Selon un perfectionnement, la tête de préhension comporte un disque de commande, monté à rotation par rapport au bras, et comprenant deux chemins de came recevant chacun un galet solidaire d'un mors, l'ensemble étant agencé de sorte que l'actionnement en rotation du disque de commande contrôle le passage de la position d'ouverture à la position de fermeture, une première extrémité des chemins de came correspondant à la position d'ouverture et une deuxième extrémité des chemins de came correspondant à la position de fermeture.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un dispositif pour alimenter en écrous une unité de sertissage, en perspective.
La figure 2 illustre le dispositif d'alimentation, en perspective.
Les figures 3 et 4 illustrent les moyens de serrage à base de mors.
La figure 5 illustre une vue plus détaillée des moyens pour déplacer l'écrou transféré depuis le tube de transfert vers l'unité de sertissage.
La figure 6 illustre une variante du dispositif pour alimenter en écrous l'unité de sertissage.
La figure 7 illustre un développement de l'invention utilisant un poussoir à bille et une butée de limitation de course.
La figure 8 représente une vue en coupe d'un exemple de réalisation particulier d'une tête de préhension.

### Description de modes préférentiels de réalisation

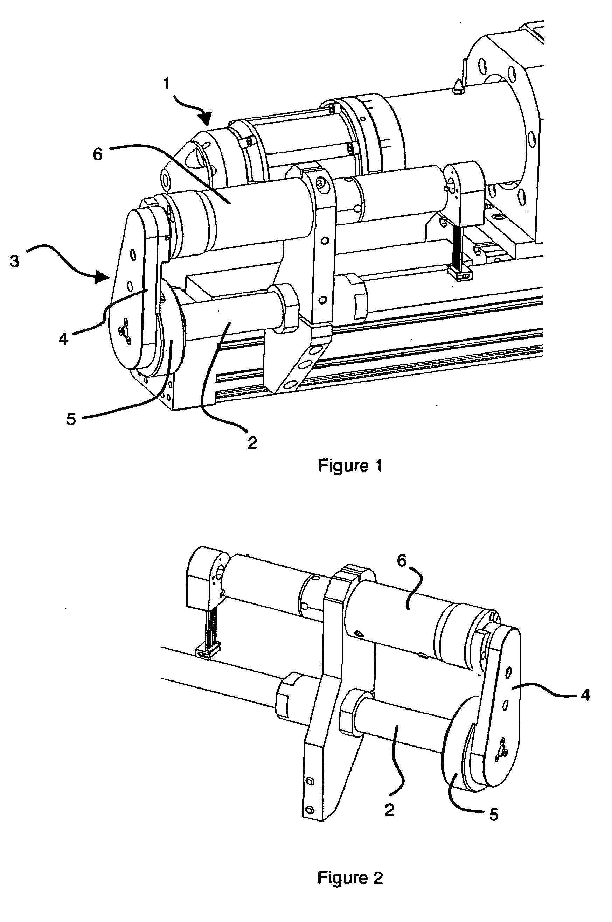

Comme illustré aux figures 1 et 2, le dispositif permet d'alimenter une unité de sertissage 1 en écrous à sertir, de préférence de type à corps hexagonal. Les écrous sont stockés dans une zone de stockage (non représentée) et le dispositif comporte des moyens pour sélectionner individuellement les écrous de la zone de stockage. Après sélection d'un écrou, ce dernier est envoyé dans un tube de transfert 2 dans lequel il se déplace par soufflage jusqu'à des moyens 3 pour déplacer l'écrou transféré depuis le tube de transfert 2 vers l'unité de sertissage 1. Les moyens 3 pour déplacer l'écrou transféré comportent un bras 4 articulé équipé à son extrémité libre d'une tête de préhension 5. Le bras 4 varie, par actionnement d'un moteur électrique 6, entre une première position, dans laquelle la tête 5 est placée dans le prolongement du tube de transfert 2, et une deuxième position dans laquelle la tête 5 est en regard de l'unité de sertissage 1.

La tête de préhension 5 permet en première position de réceptionner en sortie du tube de transfert 2 l'écrou transféré, puis de l'orienter, si ce dernier est à corps hexagonal, et le brider en le saisissant. Une fois l'écrou saisi, la tête de préhension 5 est déplacée vers la deuxième position par l'actionnement du moteur électrique 6 qui transmet son couple de manière à entraîner l'ensemble formé par le bras 4 et la tête de préhension 5. En deuxième position, l'écrou saisi peut, par exemple, être vissé sur une tige filetée de l'unité de sertissage 1, puis une fois en place, être débridé de sorte que la tête de préhension 5 puisse retourner en première position pour réceptionner un nouvel écrou transféré.

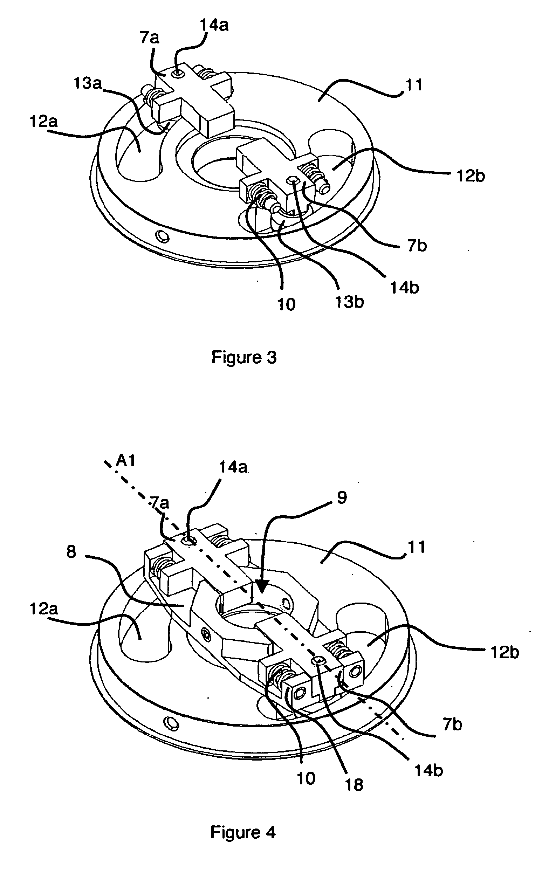

Afin d'orienter et de brider convenablement l'écrou transféré, la tête de préhension 5 peut comporter, comme illustré aux figures 3 et 4, un mécanisme de serrage à deux mors 7a, 7b opposés variant entre une position de fermeture, dans laquelle les mors 7a, 7b enserrent le corps de l'écrou transféré, ou le cas échéant deux faces parallèles du corps hexagonal de l'écrou transféré, et une position d'ouverture libérant ledit écrou.

Selon un perfectionnement, le mécanisme de serrage comporte des moyens pour solliciter élastiquement en continu les mors 7a, 7b vers la position de fermeture. Un exemple particulier de réalisation est illustré à la figure 4. Les mors 7a, 7b sont montés sur une platine 8, de forme allongée dans une direction longitudinale, comportant au niveau d'une zone centrale un trou débouchant 9 réalisé perpendiculairement à la platine 8, ledit trou débouchant 9 étant destiné à recevoir l'écrou transféré. À cet effet, le diamètre du trou débouchant 9 est supérieur au diamètre de l'écrou à sertir. De préférence, il sera laissé un jeu fonctionnel de l'ordre de 1/10 de millimètres entre le diamètre interne du trou débouchant 9 et le corps de l'écrou à sertir. Les mors 7a, 7b se déplacent en translation selon un axe A1 longitudinal (figure 4) coïncidant avec la direction longitudinale de la platine 8, et sont respectivement solidaires de la platine 8 à ses extrémités longitudinales opposées par l'intermédiaire d'au moins un ressort 10 les sollicitant élastiquement en continu vers la position de fermeture. Un mors 7a, 7b peut se présenter sous la forme d'une croix, un tronc principal de la croix étant longitudinalement parallèle à l'axe A1 de la platine 8, et deux branches de la croix étant disposées de part et d'autre du tronc de manière coaxiale entre elles et perpendiculaire au tronc. Les deux branches de chaque croix sont respectivement solidaires de la platine 8 par l'intermédiaire d'au moins un ressort 10 fixé par une extrémité à ladite branche et par son extrémité opposée à un épaulement 18 aménagé à l'extrémité libre correspondante de la platine 8, selon l'axe longitudinal A1. Ainsi, les mors 7a, 7b sont sollicités élastiquement en continu vers la position de fermeture. Cet épaulement 18 est, de préférence, sensiblement perpendiculaire au plan formé par la platine 8.

La tête de préhension 5 peut en outre comporter un disque de commande 11, monté à rotation par rapport au bras 4, et comprenant deux chemins de came 12a, 12b recevant respectivement un galet 13a, 13b solidaire d'un mors 7a, 7b du mécanisme de serrage. L'ensemble est agencé de sorte que l'actionnement en rotation du disque de commande 11 contrôle le passage de la position d'ouverture à la position de fermeture et inversement. Une première extrémité des chemins de came 12a, 12b correspond à la position d'ouverture et une deuxième extrémité des chemins de came 12a, 12b correspond à la position de fermeture. Ainsi, les deux chemins de came 12a, 12b sont symétriques pour garantir un déplacement identique des deux mors 7a, 7b de serrage. Selon l'exemple particulier de la figure 4, la platine 8 est disposée sur une face, supérieure du disque de commande 11, ladite face comportant les chemins de came 12a, 12b. Chaque galet est solidaire d'un mors 7a, 7b par l'intermédiaire d'une tige 14a, 14b fixée coaxialement dans le galet 13a, 13b et montée à rotation dans le mors 7a, 7b au niveau du tronc principal dudit mors. Selon une variante, chaque galet 13a, 13b est solidaire d'un mors 7a, 7b par l'intermédiaire d'une tige 14 d'une part fixée dans le mors 7a, 7b au niveau du tronc principal, et d'autre part monté à rotation coaxialement dans le galet 13a, 13b correspondant. Les chemins de came 12a, 12b sont arrangés de sorte que les mors 7a, 7b puissent se déplacer en translation dans la direction de l'axe A1 le long de la platine 8 d'une valeur constante. Ainsi, le disque 11 de commande pivote sur son axe et provoque le déplacement des mors 7a, 7b. L'amplitude de rotation du disque 11 de commande est contrainte par la combinaison des chemins de came 12a, 12b et des galets 13a, 13b.

De plus, lors de l'utilisation d'un écrou à sertir de type à corps hexagonal, il est intéressant de connaître l'orientation de ce dernier. En effet, en se refermant, les deux mors 7a, 7b peuvent soit directement enserrer les deux faces parallèles du corps de l'écrou hexagonal, si ce dernier est déjà en bonne position, soit prendre appui sur deux arêtes opposées du corps hexagonal de l'écrou. Dans le cas où les mors 7a, 7b prennent appui sur deux arêtes de l'hexagone du corps de l'écrou, le maintien de ce dernier dans la tête de préhension n'est pas optimal du fait de son orientation. Le dispositif comporte alors au niveau de la tête de préhension 5 des moyens d'orientation de l'écrou à corps hexagonal de sorte que les mors 7a, 7b viennent en appui sur deux pans parallèles du corps hexagonal de l'écrou.

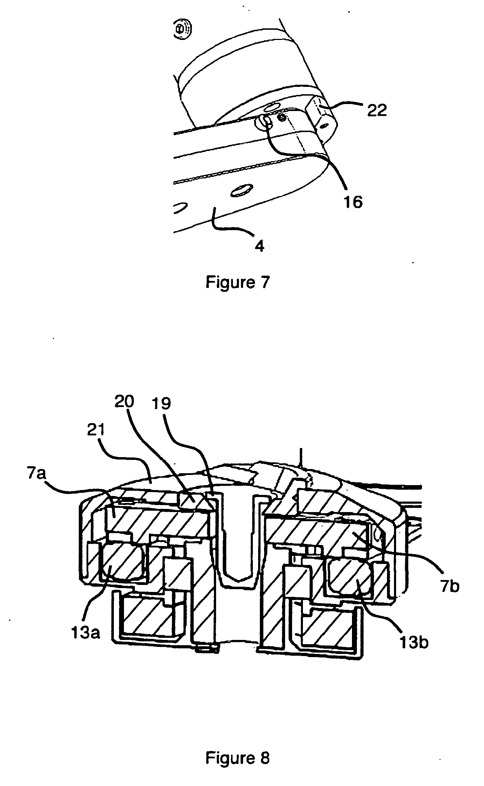

Un exemple particulier de réalisation est illustré à la figure 8 représentant une vue en coupe de la tête de préhension 5 dans laquelle un écrou à sertir a été inséré. L'écrou à sertir 19 est en appui sur une douille de centrage 20 sensiblement coaxiale au trou débouchant de la platine 8. Cette douille de centrage 20 est solidaire d'un carter 21 de protection de la platine 8 et des chemins de came 12a, 12b, ledit carter 21 étant lui-même solidaire du disque 11 de commande. Le carter 21 est, par exemple, en forme de cloche fixée par des vis au niveau du pourtour du disque 11 de commande. L'écrou à sertir étant en appui sur la douille de centrage 20, la mise en rotation du disque 11 de commande entraîne aussi la rotation de l'écrou 19. Au fur et à mesure de la rotation du disque 11 de commande, dans le sens de fermeture, les mors 7a, 7b se rapprochent progressivement de l'écrou 19 à sertir. Lorsque, le cas échéant, les mors 7a, 7b arrivent en contact avec deux arêtes opposées de l'écrou à sertir, la rotation de l'écrou induite par son contact avec la douille de centrage 20 permet à l'écrou 19 de basculer de sorte que les mors 7a, 7b viennent prendre appui sur deux faces opposées de l'hexagone. L'écrou est alors à la fois orienté et bridé. Bien entendu, une telle tête de préhension 5 peut aussi être utilisée pour saisir des écrous à sertir dont le corps est cylindrique, la fonction d'orientation n'est alors pas utilisée.

Le basculement de l'écrou est amélioré si les chemins de came 12a, 12b sont dimensionnés afin de permettre un jeu fonctionnel de 0,5mm des galets 13a, 13b sur toute la longueur des chemins de came 12a, 12b. Ce jeu fonctionnel permet aux mors 7a, 7b de ne plus translater lorsque ces derniers sont en contact avec les arêtes alors que la rotation du disque de commande 11 continue. Lorsque les galets 13a, 13b atteignent la deuxième extrémité des chemins de came 12a, 12b, la distance entre les deux mors 7a, 7b, aussi appelée valeur de serrage, est légèrement inférieure à la distance séparant les deux pans parallèles de l'écrou à sertir. La valeur de serrage est compensée par les ressorts 10, formant les moyens sollicitant élastiquement en continu les mors 7a, 7b vers la position de fermeture, qui se compriment lors du contact des mors 7a, 7b avec l'écrou. Ainsi, l'écrou est à la fois orienté et bridé.

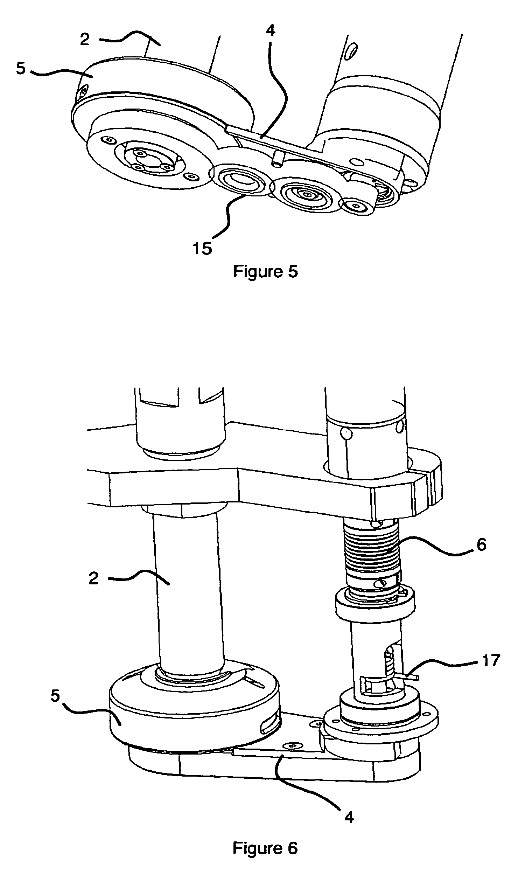

Selon un perfectionnement illustré à la figure 5, le moteur électrique 6 et le disque de commande 11 sont reliés entre eux par des moyens de transmission 15 permettant au moteur d'actionner le disque 11 en rotation. Ces moyens de transmission 15 peuvent se présenter sous la forme de deux poulies d'entraînement respectivement fixées au moteur 6 et au disque 11, lesdites poulies d'entraînement étant reliées entre elles par une courroie de transmission. Les moyens de transmission peuvent aussi être réalisés par une cascade de pignons 15 comme sur la figure 5. Un premier pignon situé à une première extrémité de la cascade de pignons 15 est entraîné en rotation par le moteur électrique 6 qui transmet, par l'intermédiaire de la cascade 15 un mouvement de rotation à un autre pignon situé à la deuxième extrémité de la cascade de pignon 15. Le pignon situé à la deuxième extrémité de la cascade entraîne alors en rotation le disque de commande 11.

Le moteur électrique 6 peut alors, en plus de permettre le passage de la tête de préhension 5 de la première à la deuxième position, permettre d'actionner l'ouverture et la fermeture des mors 7a, 7b par la mise en rotation du disque. Ainsi, dans un premier temps, la tête de préhension 5 étant en première position, le moteur 6 entraîne en rotation, par les moyens de transmission 15, le mécanisme de serrage en position de fermeture. Une fois que la position de fermeture est atteinte, les mors 7a, 7b ont bridé l'écrou, les galets 13a, 13b sont positionnés à la deuxième extrémité de leur chemin de came 12a, 12b respectif et prennent appui sur cette extrémité. Dans un second temps la prolongation de l'action qui a conduit le mécanisme de serrage à passer de la position d'ouverture à la position de fermeture provoque le passage de la tête 5 vers la seconde position. En effet, les galets 13a, 13b étant en contact avec la deuxième extrémité de leur chemin de came 12a, 12b respectif, le couple du moteur 6 est transmis au bras 4 des moyens 3 pour déplacer l'écrou de sorte que la tête de préhension 5 quitte sa première position en direction de la seconde position.

Autrement dit, dans un référentiel associé au bras 4, le disque de commande 11 est entraîné en rotation par le moteur électrique 6 pour commander l'ouverture et la fermeture des mors 7a, 7b, et la platine 8 est fixe par rapport au bras 4.

Selon un perfectionnement illustré à la figure 6, le dispositif d'alimentation en écrou comporte des moyens 17 pour solliciter élastiquement la tête de préhension 5 vers la première position. Ainsi, lorsque les galets 13a, 13b ont atteint la deuxième extrémité de leur chemin de came 12a, 12b respectif, le couple du moteur 6 doit être supérieur au couple des moyens 17 sollicitant élastiquement la tête de préhension 5 vers la première position pour permettre le déplacement de la tête 5 vers la deuxième position. Une fois l'écrou libéré en deuxième position, il suffit de diminuer le couple du moteur 6 électrique à une valeur inférieure au couple des moyens 17 sollicitant élastiquement la tête de préhension 5 vers la première position. La tête 5 retourne alors progressivement en première position grâce au moteur électrique 6 qui sert alors de frein moteur. L'utilisation du moteur 6 en tant que frein moteur évite les à-coups brusques qui pourraient endommager le dispositif d'alimentation.

Lors du transfert d'un écrou du tube de transfert 2 à la tête de préhension 5, cette dernière doit être parfaitement alignée avec le tube de transfert 2. Cet alignement peut être garanti par les moyens 17 de sollicitation élastique permettant de maintenir la tête en première position lors de la fermeture du mécanisme de serrage. Ainsi, les moyens 17 sollicitant élastiquement la tête de préhension 5 vers la première position peuvent, par exemple, être constitués par un ressort de torsion précontraint en première position de la tête de préhension 5. Le ressort de torsion peut comme sur la figure 6 être coaxial à l'arbre d'entraînement du moteur 6, cet axe étant de préférence parallèle à l'axe longitudinal du tube de transfert 2. Les moyens 17 de sollicitation peuvent être épaulés par un poussoir à bille 16 comportant une empreinte (non représentée), au niveau de l'articulation du bras 4, dans laquelle est logée la bille en première position. Ainsi, lorsque les galets 13a, 13b ont atteint la deuxième extrémité de leur chemin de came 12a, 12b respectif, le couple du moteur 6 doit être supérieur au couple des moyens 17 sollicitant élastiquement la tête de préhension 5 vers la première position plus la force nécessaire pour faire sortir la bille de son empreinte. Cette condition est nécessaire pour permettre le déplacement de la tête de préhension 5 vers la deuxième position et a pour effet de renforcer la garantie de l'alignement de la tête de préhension 5 avec le tube 2 de transfert en première position.

Selon une variante, la bille du poussoir à bille 16 du bras 4 coopère avec une butée 22 illustrée à la figure 7 de sorte que la bille se déplace en direction de la butée lors du passage de la première position de la tête de préhension 5 à sa deuxième position, ladite bille limitant la course de la tête de préhension 5 en atteignant la butée.

Un tel dispositif présente l'avantage de n'utiliser que de l'énergie électrique, son entretien et son réglage sont donc plus faciles que ceux des dispositifs pneumatiques de l'art antérieur. De plus avec le perfectionnement utilisant le mécanisme de serrage à base de mors associé au moteur électrique , un seul actionneur est nécessaire pour remplir toutes les fonctionnalités du dispositif d'alimentation en écrou de l'unité de sertissage 1, à savoir le bridage et l'orientation de l'écrou à sertir ou le simple bridage de l'écrou à sertir.

## Revendications

1. Dispositif pour alimenter en écrous à sertir une unité de sertissage (1) depuis une zone de stockage des écrous, ledit dispositif comporte :
- des moyens pour sélectionner individuellement les écrous dans la zone de stockage,
- un tube de transfert (2) dans lequel l'écrou sélectionné se déplace par soufflage,
- des moyens (3) pour déplacer l'écrou transféré depuis le tube de transfert (2) vers l'unité de sertissage (1), comprenant un bras (4) articulé équipé à son extrémité libre d'une tête de préhension (5), ledit bras (4) variant, par actionnement d'un moteur électrique (6), entre une première position dans laquelle la tête (5) est placée dans le prolongement du tube de transfert (2), et une deuxième position dans laquelle la tête (5) est en regard de l'unité de sertissage (1),
la tête de préhension (5) comporte un mécanisme de serrage à deux mors (7a, 7b) opposés variant entre une position de fermeture dans laquelle les mors (7a, 7b) enserrent le corps de l'écrou transféré afin d'orienter et de brider l'écrou transféré, et une position d'ouverture libérant ledit écrou, ledit moteur électrique (6) étant agencé pour permettre, en plus du passage de la tête de préhension (5) de la première position à la deuxième position, l'actionnement de l'ouverture et de la fermeture des mors.

2. Dispositif selon la revendication 1, **caractérisé en ce que** le mécanisme de serrage comporte des moyens pour solliciter élastiquement en continu les mors (7a, 7b) vers la position de fermeture.

3. Dispositif selon l'une des revendications 1 et 2, **caractérisé en ce que** la tête de préhension (5) comporte un disque de commande (11), monté à rotation par rapport au bras (4), et comprenant deux chemins de came (12a, 12b) recevant chacun un galet (13a, 13b) solidaire d'un mors (7a, 7b), l'ensemble étant agencé de sorte que l'actionnement en rotation du disque de commande (11) contrôle le passage de la position d'ouverture à la position de fermeture, une première extrémité des chemins de came (12a, 12b) correspondant à la position d'ouverture et une deuxième extrémité des chemins de came (12a, 12b) correspondant à la position de fermeture.

4. Dispositif selon la revendication 3, **caractérisé en ce que** ledit moteur électrique (6) et le disque de commande (11) sont reliés entre eux par des moyens de transmission (15).

5. Dispositif selon la revendication 4, **caractérisé en ce qu'**il comporte des moyens (17) pour solliciter élastiquement la tête (5) de préhension vers la première position.

6. Dispositif selon la revendication 5, **caractérisé en ce que** le bras (4) comporte un poussoir à bille (16), l'articulation du bras étant munie d'une butée (22) de la bille (16), limitant la course de la tête (5) de préhension lors du déplacement en seconde position, et d'une empreinte dans laquelle est logée la bille (16) en première position.

7. Dispositif selon l'une quelconque des revendications 1 à 6 **caractérisé en ce qu'**il comporte au niveau de la tête (5) de préhension des moyens d'orientation de l'écrou à sertir.

## Claims

1. A device for feeding a crimping unit (1) with pierce nuts from a storage area of the nuts, said device comprises:
- means for selecting the nuts individually in the storage area,
- a transfer tube (2) in which the selected nut moves by blowing,
- means (3) for moving the transferred nut from the transfer tube (2) to the crimping unit (1), comprising an articulated arm (4) equipped at its free end with a gripping head (5), said arm (4), by actuation of an electric motor (6), varying between a first position in which the head (5) is placed in the extension of the transfer tube (2) and a second position in which the head (5) is facing the crimping unit (1),
the gripping head (5) comprises a clamping mechanism with two opposite jaws (7a, 7b) varying between a closed position in which the jaws (7a, 7b) clamp the body of the transferred nut in order to orient and restrain the transferred nut, and an open position releasing said nut, said electric motor (6) being arranged to enable actuation of opening and closing of the jaws, in addition to movement of the gripping head (5) from the first position to the second position.

2. The device according to claim 1, **characterized in that** the clamping mechanism comprises means for continuously elastically biasing the jaws (7a, 7b) to the closed position.

3. The device according to one of claims 1 and 2, **characterized in that** the gripping head (5) comprises a control disc (11) mounted rotating with respect to the arm (4), and comprising two cam paths (12a, 12b) each receiving a roller (13a, 13b) securedly attached to a jaw (7a, 7b), the assembly being arranged in such a way that actuation of the control disc (11) in rotation controls movement from the open position to the closed position, a first end of the cam paths (12a, 12b) corresponding to the open position and a second end of the cam paths (12a, 12b) corresponding to the closed position.

4. The device according to claim 3, **characterized in that** said electric motor (6) and the control disc (11) are connected to one another by transmission means (15).

5. The device according to claim 4, **characterized in that** it comprises means (17) for flexibly biasing the gripping head (5) to the first position.

6. The device according to claim 5, **characterized in that** the arm (4) comprises a ball plunger (16), the articulation of the arm being provided with a stop (22) of the ball (16) limiting the travel of the gripping head (5) when movement takes place to the second position, and with an indenture in which the ball (16) is housed in the first position.

7. The device according to any one of claims 1 to 6, **characterized in that** it comprises means for directing the pierce nut at the level of the gripping head (5).

## Patentansprüche

1. Vorrichtung zur Zuführung von Nietmuttern zu einer Crimpeinheit (1) aus einem Nietmuttern-Lager, welche Vorrichtung umfasst:
- Mittel zum einzelnen Auswählen der Muttern im Lager,
- ein Förderrohr (2), in dem die ausgewählte Mutter durch Blasen transportiert wird,
- Mittel (3) zum Transport der geförderten Mutter aus dem Förderrohr (2) zur Crimpeinheit (1), die einen angelenkten Arm (4) umfassen, der an seinem freien Ende mit einem Greifkopf (5) versehen ist, welcher Arm (4) durch Betätigung eines Elektromotors (6) zwischen einer ersten Position, in der der Kopf (5) in Verlängerung des Förderrohrs (2) angeordnet ist, und einer zweiten Position hin- und herwechselt, in der sich der Kopf (5) gegenüber der Crimpeinheit (1) befindet,
der Greifkopf (5) eine Spannvorrichtung mit zwei entgegengesetzten Spannbacken (7a, 7b) umfasst, die zwischen einer Schließposition, in der die Spannbacken (7a, 7b) den Körper der herangeführten Mutter einspannen, um die herangeführte Mutter auszurichten und anzuflanschen, und einer Öffnungsposition wechseln, welche die genannte Mutter freigibt, welcher Elektromotor (6) so angeordnet ist, dass er außer dem Bewegen des Greifkopfs (5) aus der ersten in die zweite Position die Steuerung des Öffnens und Schließens der Spannbacken erlaubt.

2. Vorrichtung nach Anspruch 1, **dadurch gekennzeichnet, dass** die Spannvorrichtung Mittel zum kontinuierlichen elastischen Ziehen der Spannbacken (7a, 7b) zur Schließposition hin umfasst.

3. Vorrichtung nach einem der Ansprüche 1 und 2, **dadurch gekennzeichnet, dass** der Greifkopf (5) eine Steuerscheibe (11) umfasst, die drehbar bezüglich dem Arm (4) montiert ist und zwei Nockenwege (12a, 12b) aufweist, die jeweils eine Rolle (13a, 13b) aufnehmen, die fest verbunden ist mit einer Spannbacke (7a, 7b), wobei die Einheit so angeordnet ist, dass die Drehbetätigung der Steuerscheibe (11) den Übergang aus der Öffnungs- in die Schließposition steuert, wobei ein erstes Ende der Nockenwege (12a, 12b) der Öffnungsposition und ein zweites Ende der Nockenwege (12a, 12b) der Schließposition entspricht.

4. Vorrichtung nach Anspruch 3, **dadurch gekennzeichnet, dass** der Elektromotor (6) und die Steuerscheibe (11) miteinander über Übersetzungsmittel (15) verbunden sind.

5. Vorrichtung nach Anspruch 4, **dadurch gekennzeichnet, dass** sie Mittel (17) zum elastischen Ziehen des Greifkopfs (5) in Richtung auf die erste Position umfasst.

6. Vorrichtung nach Anspruch 5, **dadurch gekennzeichnet, dass** der Arm (4) einen Stößel mit einer Kugel (16) umfasst und das Gelenk des Arms mit einem Anschlag (22) für die Kugel (16) versehen ist, der den Weg des Greifkopfs (5) beim Bewegen in die zweite Position begrenzt, und mit einer Vertiefung, in der die Kugel (16) in der ersten Position gelagert ist.

7. Vorrichtung nach einem der Ansprüche 1 bis 6, **dadurch gekennzeichnet, dass** sie im Bereich des Greifkopfs (5) Mittel zur Ausrichtung der zu crimpenden Mutter umfasst.
